# DEMANDE DE BREVET EUROPEEN

(11) **EP 1 122 919 A1**
(43) Date de publication de la demande: **08.08.2001**
(21) Numéro de dépôt: 01400153.1
(22) Date de dépôt: 19.01.2001
(51) Int. Cl.: H04L 12/56

(54) **Procédé d'acheminement de messages dans un réseau ad hoc**

(30) Priorité: 03.02.2000 FR 0001350
(71) Demandeur: ALCATEL, 75008 Paris (FR)
(72) Inventeur: Fabre, Benoît, 91160 Longjumeau (FR)
(74) Mandataire: Lamoureux, Bernard

(57) **Abrégé**

Procédé d'acheminement d'un message d'un premier noeud (N₁₇) vers un second noeud (N₂₁) au travers d'un ensemble de noeuds intermédiaires (N₁, N₂, N₃... N₃₄), chacun des noeuds n'ayant la connaissance que des noeuds appartenant à son voisinage (V), et le premier noeud et chacun des noeuds intermédiaires mettant en oeuvre les étapes visant à :
- tester si le second noeud fait partie dudit voisinage, et sinon,
- envoyer le message à destination d'un ensemble de noeuds à la frontière du voisinage, via un ensemble de noeuds voisins,

le procédé étant caractérisé en ce que l'ensemble de noeuds voisins est déterminé par une liste d'identificateurs de noeuds contenue dans le message, et en ce qu'avant d'envoyer ce message, le noeud intermédiaire ajoute dans cette liste, les identificateurs des noeuds de l'ensemble de noeuds voisins.

## Description

La présente invention concerne un procédé d'acheminement de messages dans un réseau dont la topologie n'est pas connue de ses noeuds. L'invention s'applique particulièrement aux réseaux dits ad hoc.
Un réseau ad hoc est un réseau dont la topologie (c'est-à-dire la configuration des connexions entre ses éléments) est susceptible d'évoluer avec le temps. C'est typiquement le cas d'un réseau dont les éléments (ou noeuds) sont mobiles et connectés par des connexions radioélectriques. Du fait de cette mobilité, la topologie du réseau n'est pas fixe, et ne peut donc pas être connue à tout moment. Par conséquent l'acheminement (ou routage) d'un message dans ce réseau est problématique, et ne peut être résolu par les algorithmes classiques de routage.

Un premier exemple est celui des réseaux à déploiement rapide, comme ceux mis en oeuvre lors d'opérations de secours en cas de catastrophes (incendie, inondation etc.) pouvant engendrer la mise hors service du réseau de télécommunication habituel. Ces événements peuvent nécessiter la mise en place rapide d'un nouveau réseau de radiocommunication dont les stations de base peuvent, par exemple, être situées dans des véhicules et donc se déplacer les unes par rapport aux autres.

Un autre exemple est celui des nouvelles générations de réseaux de radiocommunication mobiles, tels les réseaux GSM. En effet, dans les réseaux actuels, les stations de base sont fixes. Cela engendre le problème des « zones d'ombre », c'est-à-dire d'étendues géographiques qui ne sont pas couvertes par une station de base du fait d'un bâtiment ou d'un monticule, par exemple, faisant obstacle à la propagation des ondes radioélectriques. Afin de pouvoir couvrir ces zones d'ombre, il peut être envisagé de faire se comporter tout ou partie des terminaux mobiles comme autant de stations de base mobiles ou, tout du moins, de relais entre les stations de base fixes et d'autres terminaux mobiles.

Un troisième exemple est celui des réseaux satellites, comme par exemple les constellations défilantes avec connexions entre les satellites (qui peuvent être vus comme autant de stations de base.). Dans ce cas-là, toutefois, bien que la topologie du réseau évolue avec le temps, cette évolution est prédictible, rendant le problème moins complexe.

On comprend que dans ce genre de réseau, un chemin établie à un instant t entre deux noeuds (terminaux, stations de base, etc.) peut ne plus être valide, ou tout du moins, peut ne plus être optimal, à un instant †+△†.
Les solutions comportant des tables de routage, comme par exemple celles utilisés dans les protocoles de type IP (*Internet Protocol*) ne peuvent donc pas être utilisées.

L'article « *A New Routing Protocol for the Reconfigurable Wireless Network»* de Zygmunt J. Haas ; ICUPC'97, San Diego, octobre 1997, présente un procédé d'acheminement de messages au travers d'un tel réseau ad hoc. Ce procédé est habituellement appelé ZRP pour Zone *Routing* Protocol, en anglais. Ce même procédé a été divulgué un mois plus tard, en novembre 1997, sous la forme d'un « Internet Draft » intitulé « The Zone *Routing Protocol (ZRP) for Ad Hoc Networks ».* Les auteurs en sont Zygmunt J. Haas et Marc R. Pearlman.
Du point du vu d'un noeud, le réseau est partagé entre deux domaines : son voisinage et l'extérieur de ce voisinage. Le voisinage est l'ensemble des noeuds pour lesquels il possède une connaissance sur la façon d'acheminer un message vers eux. L'extérieur est bien entendu l'ensemble des noeuds non contenus dans ce voisinage (et différents du noeud en question).

On définit au sein de ce réseau une distance consistant au nombre minimal de connexion joignant deux noeuds.
On appelle rayon du voisinage, la distance maximale, en nombre de connexions, entre le noeud concerné (au centre du voisinage), et les noeuds situés à la frontière de ce voisinage.
On définit aussi une zone appelée frontière d'un voisinage, formée des noeuds situés à une distance du noeud concerné égale au rayon du voisinage.

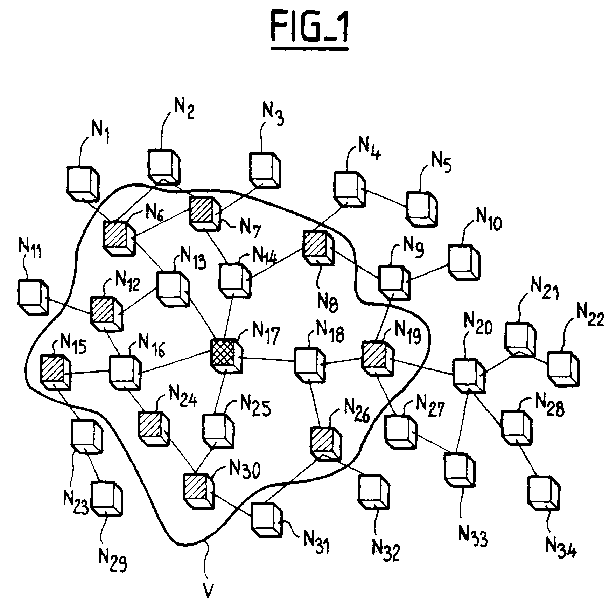

La figure 1 permet d'illustrer ces différentes notions, en représentant un réseau comportant un ensemble de noeuds, N₁ à N₃₄ interconnectés. Dans cet exemple, on prend le point de vue du noeud N₁₇.
On considère que les noeuds ont un voisinage de rayon 2, délimité par la courbe V.
Ce voisinage définit un ensemble de noeuds, N₆, N₇, N₈, N₁₉, N₂₆, N₃₀, N₂₄, N₁₅ et N₁₂, qui sont situés à la frontière.
Selon les définitions données précédemment, le noeud N₁₇ ne connaît l'existence que des noeuds situés à l'intérieur de la courbe V.

Afin d'acheminer un message d'un premier noeud (N₁₇) à un second noeud (par exemple N₂₁), le procédé ZRP prévoit que tout d'abord, on regarde si ce second noeud est situé dans le voisinage de ce premier noeud. Si tel n'est pas le cas, le message à acheminer est transmis vers les noeuds situés à la frontière du voisinage de ce premier noeud.
Chacun de ces noeuds possède, lui aussi, un voisinage. Le procédé qui vient d'être décrit est alors réitéré sur chacun de ces nouveaux voisinages. Le message est donc propagé à travers le réseau, et doit normalement finir par arriver au second noeud.
Par exemple, le message est tout d'abord envoyé aux noeuds situés à la frontière du voisinage du noeud N₁₇. Il aboutit notamment au noeud N₁₉. Celui-ci a un voisinage dans lequel on trouve le noeud N₂₁. Le chemin recherché est alors la concaténation entre le chemin allant du noeud N₁₇ au noeud N₁₉ et le chemin allant du noeud N₁₉ au noeud N₂₁.

La façon dont on trouve le chemin allant d'un noeud à un noeud situé dans son voisinage est plus classique, et peut être conforme aux procédés selon l'état de la technique. Toutefois, du fait du contexte général dans lequel ce procédé est mis en oeuvre, certains procédés sont plus appropriés que d'autres.
Ce procédé choisi est utilisé d'une part pour acheminer le message vers le noeud destinataire lorsque celui-ci est situé dans le voisinage d'un noeud intermédiaire, et d'autre part, pour acheminer le message d'un noeud intermédiaire vers les noeuds situés à la frontière du voisinage de celui-ci.

Ce message peut être un message de recherche de chemin, c'est-à-dire qu'il est utilisé pour établir un chemin entre le premier et le second noeud. A la réception d'un tel message de recherche de chemin, le second noeud (le destinataire du message) répond au premier noeud de sorte que ce dernier acquière la connaissance du chemin emprunté par ce message. Pour ce faire, le message contient la liste des noeuds traversés.

Ainsi, le premier noeud est à même d'émettre de nouveaux messages à destination du second noeud, en utilisant un protocole de communication qui permet de faire des communications en mode connecté, c'est-à-dire que tous les messages appartenant à une même communication utiliseront le même chemin ainsi déterminé.
Par exemple, le chemin peut être précisé dans l'entête du réseau, ou bien, chaque noeud situé sur le chemin garde en mémoire ce chemin afin d'acheminer correctement les messages désirant l'emprunter.

Ce message peut aussi être un message véhiculant des informations à destination du second noeud, dans un but autre que l'établissement d'un chemin. Par exemple, il peut s'agir d'une communication en mode non connecté, c'est-à-dire dans laquelle chaque message envoyé nécessite la redécouverte du chemin reliant l'émetteur au destinataire.

Selon ce procédé ZRP, tel que divulgué dans les documents préalablement cités, il est prévu de minimiser le nombre de messages, en évitant qu'un même noeud intermédiaire envoie le même message en plusieurs exemplaires.
La figure 1 permet de mettre en exergue un tel mécanisme. Dans un premier temps, le message est envoyé, entre autres, aux noeuds N₈ et N₁₉ qui sont à la frontière du voisinage du noeud N₁₇. A la réception de ce message, le noeud N₈ (par exemple) va lui aussi considérer son propre voisinage et adresser le message aux noeuds qui en sont à la frontière, donc au noeud N₁₉ (on peut en effet vérifier que les noeuds N₈ et N₁₉ sont à une distance de 2). Par conséquent, le noeud N₈ va envoyer le message au noeud N₁₉ qui l'aura ainsi reçu en deux exemplaires.
En reprenant le même raisonnement, on peut montrer qu'en fait, un même noeud peut recevoir le même message en de nombreux exemplaires, ce qui implique une surcharge du réseau ad hoc, et donc un effondrement de ses performances.

Pour résoudre ce problème, il est plus précisément prévu de mémoriser dans chaque noeud, des informations sur les messages reçus et envoyés. Ainsi, lorsqu'un message est reçu, le noeud peut consulter ces informations pour déterminer si un message identique (même contenu, même destinataire...) a déjà été reçu. Si tel est le cas, alors ce message reçu n'est pas envoyé à nouveau.

Toutefois, bien que le problème de la minimisation du nombre de messages transmis soit posé, la solution proposée est bien insuffisante. Aussi, le but de la présente invention est de réduire encore le nombre de messages transmis au sein du réseau.

Pour cela, l'invention a pour objet un procédé d'acheminement d'un message d'un premier noeud vers un second noeud au travers d'un ensemble de noeuds intermédiaires. Chacun des noeuds n'a la connaissance que des noeuds appartenant à son voisinage. Le premier noeud et chacun des noeuds intermédiaires mettent en oeuvre les étapes visant à :
- tester si le second noeud fait partie du voisinage, et sinon,
- envoyer le message à destination d'un ensemble de noeuds à la frontière du voisinage, via un ensemble de noeuds voisins,

Ce procédé se caractérise en ce que l'ensemble de noeuds voisins est déterminé par une liste d'identificateurs de noeuds contenue dans le message, et en ce qu'avant d'envoyer ce message, le noeud intermédiaire ajoute dans la liste, les identificateurs des noeuds de cet ensemble de noeuds voisins.

Ainsi, l'ensemble des noeuds vers lequel le message est envoyé est réduit, du fait de l'utilisation de cette liste des identificateurs des noeuds vers lesquels le message est envoyé. Cette réduction induit directement une réduction du nombre de message transitant sur le réseau. Les performances de celui-ci sont donc améliorées.

Un autre objet de l'invention est un noeud d'un réseau de télécommunication, comportant :
- des moyens pour recevoir un message destiné à un noeud destinataire,
- des moyens pour tester si le noeud destinataire fait partie de son voisinage,
- des moyens pour envoyer le message à destination d'un ensemble de noeuds à frontière de ce voisinage, via un ensemble de noeuds voisins.

Ce noeud est caractérisé en ce qu'il comporte en outre des moyens pour ajouter les identificateurs des noeuds de cet ensemble de noeuds voisins, dans une liste contenue dans le message, avant envoi.

L'invention ainsi que d'autres avantages seront plus clairement compris à la lecture de la description qui va suivre en liaison avec les figures jointes.
La figure 1, déjà commentée, représente un réseau dans lequel le procédé selon l'invention peut être mis en oeuvre.
La figure 2 illustre un cas trivial d'application du procédé selon l'invention permettant de mettre en exergue un avantage de celle-ci.
La figure 3 schématise une étape dans le déroulement du procédé selon l'invention.

Lorsqu'un noeud reçoit un message à acheminer, et dans la mesure où il n'est pas le destinataire final de ce message, le première chose qu'il réalise consiste à tester si le destinataire final fait partie de son voisinage.
Si tel est le cas, alors il suffit d'envoyer le message à destination de ce destinataire final. Sinon, alors, le procédé selon l'invention prévoit d'envoyer le message à un ensemble de noeuds qui sont situés à la frontière de son voisinage. Pour ce faire, ainsi qu'il est connu en soi, ce noeud transmet d'abord le message à un ensemble de noeuds voisins, en précisant dans le contenu des messages les noeuds qu'ils doivent atteindre.

Il existe de nombreuses méthodes permettant d'acheminer un message d'un premier noeud vers un second noeud lorsqu'on connaît le réseau les connectant.

Le procédé de l'invention peut utiliser n'importe laquelle de ces méthodes selon l'état de la technique.
Une méthode classique qui est décrite dans l'article « *A New Routing Protocol for the Reconfigurable Wireless Network* » de Zygmunt J. Haas, précédemment évoqué.
Cette méthode est basée sur la recherche du plus court chemin en nombre de bonds (c'est-à-dire en nombre de connexion entre noeuds que le message doit emprunter).
Il est possible d'améliorer sensiblement les performances de cette méthode en utilisant des critères d'acheminement comme :
- La taille des files d'attente. Afin de connaître la taille des files d'attente des noeuds faisant parties de son voisinage, un noeud peut émettre vers ceux-ci des messages de mises à jour, ainsi que décrits dans le document de Zygmunt J. Haas préalablement cité.
- L'énergie des noeuds. Dans un réseau ad-hoc, il se pose souvent le problème de l'autonomie des noeuds. Aussi, il est intéressant de privilégier les noeuds ayant le plus d'énergie disponible.
- La stabilité des noeuds. Moins un noeud se déplace géographique, moins la topologie qui le relie aux autres noeuds est susceptible de changer à court terme. Aussi, afin de minimiser les surcharges en messages de contrôle lorsqu'un lien se rompt, il est préférable de privilégier les noeuds les plus stables au détriment de ceux se déplaçant rapidement.

Ces différents critères, ainsi que d'autres, peuvent être utilisés séparément ou en combinaison afin d'optimiser l'acheminement d'un message dans le voisinage du noeud émetteur.

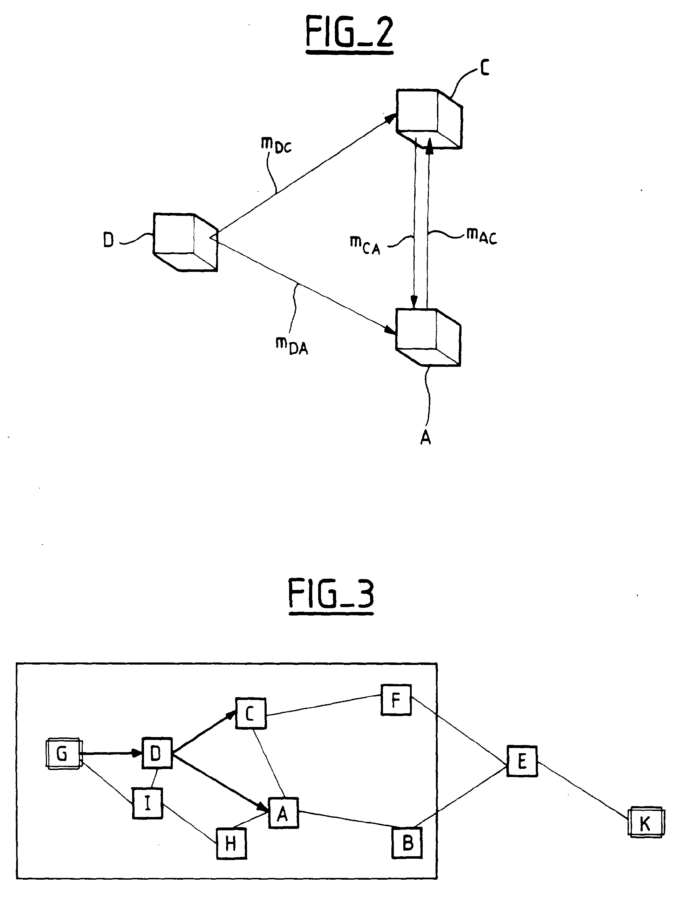

La figure 2 illustre un cas trivial d'application du mécanisme selon l'invention, consistant à ajouter dans une liste contenue dans le message, les identificateurs des noeuds vers lesquels le message va effectivement être envoyé.
Cet exemple met en oeuvre 3 noeuds, D, C et A. Malgré sa simplicité, cet exemple permet de mettre en exergue les mécanismes et avantages de l'invention, par rapport au procédé de l'état de la technique.
On suppose que D transmet un message m_{DA} vers A et un message m_{DC} vers C.
Selon l'invention, préalablement à cet envoi, les identificateurs des noeuds C et A sont ajoutés dans une liste d'identificateurs de noeuds qui est contenue dans les messages. Aussi, chacun des deux noeuds destinataires, A et C, reçoit un message contenant ces identificateurs.
Or, les noeuds A et C sont connectés et voisins. Selon un algorithme conforme à l'état de la technique, chacun d'entre eux aurait pu être amené à envoyer un message vers l'autre. Le noeud A aurait envoyé un message m_{AC} vers le noeud C et réciproquement, le noeud C aurait envoyé un message m_{CA} vers le noeud A.
Toutefois, l'invention prévoit qu'afin de déterminer l'ensemble des noeuds vers lesquels le message va être envoyé, on teste si ces noeuds font ou non partis de la liste contenue dans le message reçu. Comme c'est ici le cas, aucun message ne sera échangé entre les noeuds A et C.
Par conséquent, on fait ici l'économie des émissions de deux messages (m_{AC} et m_{CA}) par rapport à la solution de l'état de la technique.

La figure 3 illustre le déroulement du procédé de l'invention sur un réseau de taille très réduite, afin d'en illustrer les mécanismes. La figure 2, précédemment commentée, est en fait un extrait de cette figure 3.
On suppose que le noeud G veut acheminer un message vers le noeud K. On suppose par ailleurs que les noeuds possèdent des voisinages de rayon 2.

Le voisinage du noeud G est constitué des noeuds D, I, C, A et H. Les noeuds qui sont à la frontière de ce voisinage sont les noeuds C, A et H.
Ces trois noeuds C, A et H peuvent être atteint indifféremment en passant par le noeud D ou par le noeud I.
La liste des identificateurs des noeuds, qui est contenue dans le message est vide, à ce stade du procédé.
Le choix de l'acheminement au sein d'un voisinage peut être effectué selon différentes méthodes, ainsi qu'il a été expliqué précédemment. Dans cet exemple, on suppose que le message est envoyé au noeud D.
Selon l'invention, on envoi donc le message au noeud D, après avoir ajouté l'identificateur de celui-ci dans la liste des identificateurs qui est contenue dans ce message.

Les noeuds qui sont à la frontière du voisinage du noeud D sont les noeuds F, B et H.
Le noeud D ne peut pas savoir que les noeuds F et B sont connectés par le noeud E, puisque ce dernier ne fait pas parti de son voisinage. Aussi, les noeuds voisins vers lesquels il doit envoyer un message sont les noeuds C et A : le noeud C est le seul à pouvoir atteindre le noeud F, tandis que le noeud A est le seul à pouvoir atteindre le noeud H.
Comme ni l'identificateur du noeud C, ni celui du noeud A ne font parties de la liste contenue dans le message reçu par le noeud D, ce dernier :
- ajoute les identificateurs noeuds C et A à la liste en question, puis,
- envoie le message contenant cette liste modifiée, aux noeuds C et A.

Le noeud C reçoit donc un message, provenant du noeud D. Les noeuds qui sont à la frontière du voisinage de ce noeud C sont les noeuds G, I, H et E. Pour atteindre ces noeuds, il devrait envoyer des messages via les noeuds voisins F, A et D. Or, les noeuds A et D font partis de la liste contenue dans le message reçu du noeud D. Par conséquent, le noeud C, ajoute l'identificateur du noeud F dans cette liste, puis envoi le message contenant cette liste modifiée vers le noeud F.

Parallèlement, le noeud A reçoit un message provenant du noeud D. Les noeuds qui sont à la frontière du voisinage de ce noeud A sont les noeuds G, I, F et E. Pour atteindre ces noeuds, il devrait envoyer des messages via les noeuds voisins D, H, B, C. Or le noeud D fait partie de la liste contenue dans le message reçu du noeud D. Par conséquent, le noeud A ajoute l'identificateur du noeud B, puis envoi des messages contenant cette liste modifiée vers le noeud B et vers le noeud H.

A son tour, le noeud F reçoit un message provenant du noeud C. Ce noeud F contient le noeud K, destinataire final du message, dans son voisinage.

A ce stade, un procédé d'acheminement dans un voisinage ainsi qu'explicité précédemment, peut être utilisé afin d'acheminer le message jusqu'à son destinataire final.

Afin d'éviter qu'un message envoyer dans une mauvaise direction ne continue à se propager, on peut mettre en oeuvre une caractéristique supplémentaire consistant à ne plus émettre le message lorsqu'un certain critère est atteint. Ce critère peut par exemple être temporel (nombre de minutes), ou être en terme de nombre de « saut » (ou « hop » en langue anglaise), c'est-à-dire en nombre d'émission dont il a fait l'objet.

## Revendications

1. Procédé d'acheminement d'un message d'un premier noeud (N₁₇) vers un second noeud (N₂₁) au travers d'un ensemble de noeuds intermédiaires (N₁, N₂, N₃... N₃₄), chacun desdits noeuds n'ayant la connaissance que des noeuds appartenant à son voisinage (V), et ledit premier noeud et chacun desdits noeuds intermédiaires mettant en oeuvre les étapes visant à :
• tester si ledit second noeud fait partie dudit voisinage, et sinon,
• envoyer ledit message à destination d'un ensemble de noeuds à la frontière dudit voisinage, via un ensemble de noeuds voisins,
ledit procédé étant caractérisé en ce que ledit ensemble de noeuds voisins est déterminé par une liste d'identificateurs de noeuds contenue dans ledit message, et en ce qu'avant d'envoyer ledit message, ledit noeud intermédiaire ajoute dans ladite liste, les identificateurs des noeuds dudit ensemble de noeuds voisins.

2. Procédé selon la revendication précédente, caractérisé en ce que ledit message est un message de recherche de chemin, permettant la création d'un chemin entre ledit premier noeud et ledit second noeud.

3. Procédé selon l'une des revendications précédentes, dans lequel un message n'est pas envoyé lorsqu'un certain critère est atteint.

4. Noeud d'un réseau de télécommunication, comportant :
• des moyens pour recevoir un message destiné à un noeud destinataire,
• des moyens pour tester si ledit noeud destinataire fait partie de son voisinage
• des moyens pour envoyer ledit message à destination d'un ensemble de noeuds à frontière dudit voisinage, via un ensemble de noeuds voisins,
ledit noeud étant caractérisé en ce qu'il comporte en outre des moyens pour ajouter les identificateurs des noeuds dudit ensemble de noeuds voisins, dans une liste contenue dans ledit message, avant envoi.

5. Programme d'ordinateur comportant des instructions adaptées pour mettre en oeuvre un procédé selon l'une des revendications 1 à 3, lorsque ledit programme d'ordinateur est exécuté sur un ordinateur.

6. Support de mémorisation comportant des instructions adaptées pour mettre en oeuvre un procédé selon l'une des revendications 1 à 3, lorsque lesdites instructions sont exécutées sur un ordinateur.
